# EUROPEAN PATENT SPECIFICATION

(11) **EP 1 925 389 B1**
(45) Date of publication and mention of the grant of the patent: **12.05.2010**
(21) Application number: 06024235.1
(22) Date of filing: 22.11.2006
(51) Int. Cl.: B23K 1/00, B23K 1/005, B23K 26/14

(54) **Method for brazing a honeycomb sealing at a turbine**
Verfahren zum Löten einer Dichtung mit Wabenstruktur bei einer Turbine
Méthode pour le brassage d'un joint d'étanche de formation alvéolée dans une turbine

(43) Date of publication of application: 28.05.2008
(73) Proprietor: SIEMENS AKTIENGESELLSCHAFT, 80333 München (DE)
(72) Inventor: Graichen, Andreas, 60214 Norrköping (SE)

(56) References cited:
- JP-A- 61 095 769
- US-A- 5 902 498
- US-A1- 2001 014 403
- US-A1- 2004 239 040
- US-B1- 6 544 623
- US-B2- 7 029 232

## Description

The invention refers to a method for brazing a honeycomb sealing at a turbine, in particular a gas turbine.

At turbines, in particular gas turbines, in many cases a honeycomb sealing is brazed to an inner cylinder surface of guide vane segments. The honeycomb sealing prevents leakage between a rotor of the gas turbine and corresponding stator components.

In known turbines the honeycomb sealing is fixed to the turbine component by first applying a brazing filler material tape to the contact surface of the honeycomb sealing. Thus, cells of the honeycomb sealing are filled with brazing filler material. Secondly, the honeycomb sealing is welded to an inner cylinder surface by means of resistance welding. Thereafter, the prepared segment is brazed horizontally in a vacuum furnace at the working temperature of the brazing filler material in an elaborating brazing cycle. Later, normally a heat treatment cycle follows. The known method of brazing a honeycomb sealing at a turbine and the corresponding apparatus are quite process-sure in production, however, they are relatively complex and expensive, too.

Brazing by means of a laser beam in general is known from US5,902,498. Brazing of honeycomb seals to shrouds of a turbine blade is known from US2004/0239040A1. Welding of honeycomb seals is described in US2004/0239040A1.

It is an object of the present invention to provide a method and an apparatus for brazing a honeycomb sealing at a turbine, which are as process-sure as known processes, but which are cheaper and easier to handle.

The object is solved according to the invention by means of the method of claim 1 and the apparatus of claim 4. Preferred embodiments of the invention are described in the dependent claims.

According to the invention, a method for brazing a honeycomb sealing at a turbine, in particular a gas turbine, is provided including the steps of: applying a brazing filler material to the honeycomb sealing, placing the honeycomb sealing at a turbine component, directing a laser beam to the brazing filler material, and melting the brazing filler material by means of the laser beam for bonding the honeycomb sealing to the turbine component. According to the apparatus of the invention, a laser beam device for directing a laser beam to a brazing filler material is provided, wherein the brazing filler material is applied to a honeycomb sealing which is placed at a turbine component.

Preferably, the method and apparatus of the invention further include applying an inert shielding gas during melting the brazing filler material by means of the laser beam.

Further, according to a preferred embodiment of the invention the laser beam is moved relative to the honeycomb sealing thus successively bonding the honeycomb sealing to the turbine component.

According to the invention, instead of heating a vacuum brazing furnace, the energy for melting the brazing filler material is added to the honeycomb sealing by means of a laser beam.

A defocused light beam of the laser beam device enters the honeycomb cells and melts the portion of brazing filler material trapped at the bottom of the cells. Preferably, an inert shielding gas is applied locally.

Further preferred, the laser beam is moved relative to the honeycomb sealing thus successively bonding the honeycomb sealing to the material of the corresponding turbine component.

The method according to the invention provides shorter leads time for the brazing of a honeycomb sealing. This applies in particular for the process of repairing of customer turbines. Further, according to the invention no heat treatment cycles are necessary. Accordingly, the risk of deformation is decreased according to the invention.

Summarizing, the invention considerably reduces the costs for brazing a honeycomb sealing at a turbine and simplifies the entire process of brazing such a honeycomb sealing.

Hereinafter, a preferred embodiment of the invention is described by reference to the enclosed schematic drawings. Therein:
Fig. shows a cross sectional view of a gas turbine including a honeycomb sealing to be brazed therein.

A base component 10 of a gas turbine (not shown in further details) includes an inner surface 12 at which a honeycomb sealing 14 is placed. At a radial outer contact surface 16 of the honeycomb sealing 14 a brazing filler material 18 is applied by means of a tape.

A defocused laser beam 20 of a laser beam device 22 is directed from a laser optics 24 along a path of laser light 26 and a focal point 28 to a single cell or several cells of the honeycomb sealing 14 and heats the brazing filler material 18 located therein. The laser beam 20 melts the portion of the brazing filler material 18 trapped at the bottom of the corresponding cell. In the meantime, a gas supplying device 30 applies an inert shielding gas to the blazing filler material 18 of the corresponding cell.

Further, a CNC (computer numerical control) motion system 32 is provided, by means of which the laser beam device 22 is moved relative to the honeycomb sealing 14 thus successively bonding the single cells of the honeycomb sealing 14 onto the inner surface 12 of base component 10

### List of Reference Signs

- 10: base component of gas turbine
- 12: inner suface
- 14: honeycomb sealing
- 16: outer contact surface
- 18: brazing filler material
- 20: laser beam
- 22: laser beam device
- 24: laser optics
- 26: path of laser light
- 28: focal point
- 30: gas supplying device
- 32: CNC motion system

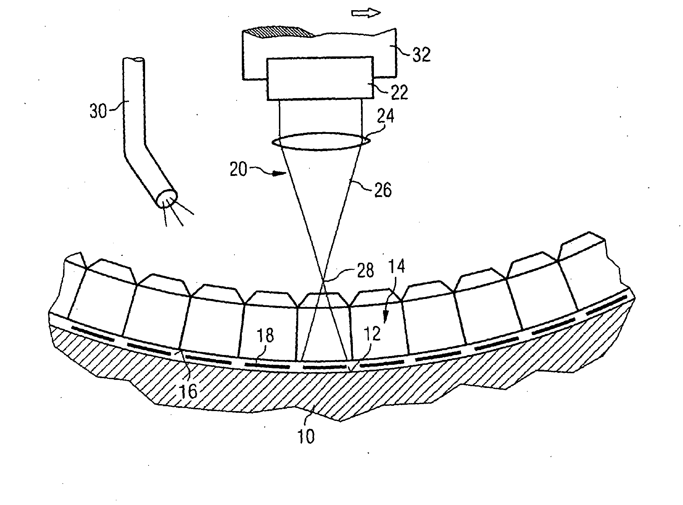

## Claims

1. Method for brazing a honeycomb sealing (14) at a turbine, in particular a gas turbine, including the steps of:
- applying a brazing filler material (18) to the honeycomb sealing (14),
- placing the honeycomb sealing (14) at a turbine component (10),
**characterized in**:
- directing a laser beam (20) to the brazing filler material (18), and
- melting the brazing filler material (18) by means of the laser beam (20) for bonding the honeycomb sealing (14) to the turbine component (10)
- wherein an inert shielding gas (30) is applied during melting the brazing filler material (18) by means of the laser beam (20).

2. Method according to claim 1, wherein the laser beam (20) is moved (32) relatively to the honeycomb sealing (14) thus successively bonding the honeycomb sealing (14) to the turbine component (10).

3. Method according to claim 1 or 2, wherein a defocused light beam of the laser beam device enters the honeycomb cells and melts the portion of brazing filler material trapped at the bottom of the cells.

## Patentansprüche

1. Verfahren zum Löten einer Wabendichtung (14) an einer Turbine, insbesondere einer Gasturbine, enthaltend die folgenden Schritte:
- Auftragen eines Lötfüllmaterials (18) auf die Wabendichtung (14),
- Platzieren der Wabendichtung (14) an einem Turbinenbauelement (10),
**gekennzeichnet durch**
- Leiten eines Laserstrahls (20) auf das Lötfüllmaterial (18) und
- Schmelzen des Lötfüllmaterials (18) mittels des Laserstrahls (20) zum Verbinden der Wabendichtung (14) mit dem Turbinenbauelement (10),
- wobei ein inertes Schutzgas (30) während des Schmelzens des Lötfüllmaterials (18) mittels des Laserstrahls (20) beaufschlagt wird.

2. Verfahren nach Anspruch 1, wobei der Laserstrahl (20) relativ zur Wabendichtung (14) bewegt wird (32), wodurch nacheinander die Wabendichtung (14) mit dem Turbinenbauelement (10) verbunden wird.

3. Verfahren nach Anspruch 1 oder 2, wobei ein defokussierter Lichtstrahl der Laserstrahleinrichtung in die Wabenzellen eintritt und den Teil Lötfüllmaterial schmilzt, der am Boden der Zellen gefangen ist.

## Revendications

1. Procédé de brasage d'un joint en nid d'abeille dans une turbine, en particulier dans une turbine à gaz, comprenant les stades dans lesquels :
- on applique une matière ( 18 ) d'apport de brasage au joint ( 14 ) en nid d'abeille,
- on place le joint ( 14 ) en nid d'abeille sur un élément ( 10 ) de turbine,
**caractérisé en ce que** :
- on dirige un faisceau ( 20 ) laser sur le matériau ( 18 ) d'apport de brasage, et
- on fait fondre le matériau ( 18 ) d'apport de brasage au moyen du faisceau ( 20 ) laser pour lier le joint ( 14 ) en nid d'abeille à l'élément ( 10 ) de turbine
- dans lequel on applique un gaz ( 30 ) inerte de protection pendant la fusion de la matière ( 18 ) d'apport de brasage à l'aide du faisceau ( 20 ) laser.

2. Procédé selon la revendication 1, dans lequel on déplace ( 32 ) le faisceau ( 20 ) laser par rapport au joint ( 14 ) en nid d'abeille en liant ainsi successivement le joint ( 14 ) en nid d'abeille à l'élément ( 10 ) de turbine.

3. Procédé selon la revendication 1 ou 2, dans lequel un faisceau lumineux défocalisé du dispositif à faisceau laser entre dans les alvéoles du nid d'abeille et fait fondre la partie de la matière d'apport de brasage piégée au fond des alvéoles.
